# FASCICULE DE BREVET EUROPEEN

(11) **EP 0 555 167 B1**
(45) Date de publication et mention de la délivrance du brevet: **01.10.1997**
(21) Numéro de dépôt: 93440011.0
(22) Date de dépôt: 27.01.1993
(51) Int. Cl.: C08L 95/00, C09K 3/32

(54) **Procédé d'enrobage de supports et produits obtenus au moyen dudit procédé**
Verfahren zum Beschichten von Trägermaterialien und so erhaltene Produkte
Process for coating materials and products obtained by this process

(30) Priorité: 31.01.1992 FR 9201260
(43) Date de publication de la demande: 11.08.1993
(73) Titulaire: Muntzer, Emile Jacques, F-67000 Strasbourg (FR); Muntzer, Paul Dr., F-67000 Strasbourg (FR); Muntzer, Jean, F-67300 Schiltigheim (FR); Muntzer, Isabelle, F-75011 Paris (FR)
(72) Inventeur: Muntzer, Emile Jacques, F-67000 Strasbourg (FR); Muntzer, Paul Emile, F-67000 Strasbourg (FR)
(74) Mandataire: Nuss, Pierre

(56) Documents cités:
- FR-A- 1 258 804
- GB-A- 554 986
- GB-A- 915 398
- US-A- 3 761 296
- US-A- 4 780 518

## Description

La présente invention concerne le domaine de l'enrobage de supports, notamment de granulats, et a pour objet un procédé d'enrobage généralisé ou universel pour liants plastiques et élastiques, principalement bitumineux.

Dans différents documents dont notamment le document FR-2608185 il a été proposé des solutions pour un enrobage à froid aux émulsions de bitume, dont les performances sont comparables ou supérieures à celles de la technique de l'enrobage à chaud, en précisant qu'il s'agit d'émulsions à base de bitumes, employés en enrobage à chaud, non ramollis par des solvants.

Ces documents exploitent l'idée de se servir des facilités de fabrication et de stabilisation des émulsions anioniques - absentes chez les émulsions cationiques - pour en faire, sous le couvert de cette stabilité, des émulsions cationiques. Cette stabilité est transmise aux émulsions cationiques de ce nouveau type, ce qui permet tous les enrobages à froid avec les mêmes formules que la technique de l'enrobage à chaud rend actuellement possible. Elles ont la faculté - comme les émulsions cationiques directes - de rompre au contact des granulats minéraux.

Ces procédés évitent la poussière et entraînent une simplification des appareils de fabrication. Le lourd dépoussiérage nécessaire à l'enrobage à chaud est supprimé et l'obligation de recomposition de la formulation granulaire, détruite par le passage au tambour sécheur, peut être évitée. Le dosage du bitume peut être réalisé de la même manière précise que pour l'enrobage à chaud par l'usine mobile de fabrication d'émulsion décrit notamment dans le document FR-2 608 645, intégrable dans un poste d'enrobage à froid. Ainsi le bitume arrive sous forme d'émulsion, avec un certain décalage, sur les granulats à enrober, dosés en conséquence. Dans ce cas le pourcentage en eau de l'émulsion - véhicule de la dose de bitume - importe peu, pourvu que les pompes de transfert soient capables d'absorber la dose de bitume, gonflée en émulsion.

La présente invention propose de remplacer la transformation cationique de l'émulsion anionique par un traitement des granulats minéraux, en vue de les rendre, une fois pour toutes hydrophobes. Sous cette forme ils sont adhésivement enrobables par toutes les formes de liants bitumineux, dont l'émulsion anionique universelle, décrite plus loin.

Par le document US-A-3 761 296 on connaît un procédé de préparation de mélanges bitumineux dans lequel on obtient, d'une part, une augmentation de l'adhésivité entre les supports et les liants par addition d'un composé de chrome et, d'autre part, une suppression du moussage par addition d'un acide gras.

Le document précité indique que les deux additifs mentionnés peuvent être ajoutés indifféremment avant, pendant ou après la mise en contact des supports avec les liants.

Ce document ne fait aucune mention du phénomène d'hydrophobation, ni de la création d'une charge électrique au niveau des supports à enrober, avant enrobage de ces derniers.

De plus, par document US-4780518, on connaît un procédé de traitement de supports absorbants en vue de les rendre hydrophobes et lipophiles, ainsi que des supports traités obtenus par ce procédé.

Toutefois, le procédé décrit s'applique spécifiquement et exclusivement à des supports organiques, et ne mentionne aucune possibilité d'application à des supports minéraux, a fortiori une application dans le cadre de l'enrobage de supports du type granulats par un liant plastique et élastique tel que du bitume.

En outre, ce procédé fait appel à de grandes quantités d'eau en vue de l'imprégnation des supports par les composés actifs, ce qui nécessite ultérieurement une phase de séchage pénalisante en dépense énergétique.

Par ailleurs, il n'est fait aucune mention dans ce document de la recherche, ni de l'obtention d'une charge électrique au niveau des supports traités, opposée à celle des liants à fixer et entraînant une attirance mutuelle entre lesdits supports et lesdits liants.

Or, la présente invention a pour objet un procédé d'enrobage, destiné à fixer adhésivement des liants plastiques et élastiques, soit sous forme fluidifiée, du fait de la chaleur ou de solvants, soit sous forme émulsionnée, sur des supports, notamment du type granulats, caractérisé en ce qu'il consiste principalement à prétraiter les supports à enrober, en les rendant hydrophobes et porteurs d'une charge électrique positive sous l'action de deux produits chimiques spécifiques, à savoir, d'une part, un sel acide métallique et, d'autre part, un acide organique à chaîne longue, de manière à uniformiser leur comportement en regard de tous les liants à chaud ou à froid, et sous toutes leurs formes, à leur conférer la capacité d'attirer ces liants, préférentiellement à l'eau, et à mettre lesdits liants en contact avec ces supports hydrophobes, en vue de leur dépôt adhésif et homogène sur lesdits supports, ce dépôt pouvant intervenir plus ou moins longtemps après ledit prétraitement hydrophobant.

L'hydrophobicité des supports à enrober peut être obtenue par les actions différenciées du sulfate de fer FeSO₄7H₂O et d'un acide organique à chaîne longue, tel qu'un acide gras ou un acide naphténique.

Après addition simultanée ou séparée des deux produits chimiques spécifiques sur les supports à hydrophober, un assèchement à froid rapide desdits produits sur les supports est avantageusement réalisé, ne nécessitant aucun apport de calories, ni de manipulation de séchage longue et entraînant l'acquisition par lesdits supports d'une charge électrique positive.

Selon une autre caractéristique de l'invention, les liants utilisés sont des liants hydrocarbonés, sous forme de fin de distillation des pétroles bruts, coupés ou non de solvants et fluidifiés, si nécessaire, ces liants étant identiques à ceux utilisés pour l'enrobage à chaud classique ou pour l'enrobage à froid aux cut-backs.

De manière préférentielle, les liants hydrocarbonés sont mis en oeuvre sous forme d'émulsions, dont les globules de bitume portent une charge électrique négative qui se rompent au contact des supports hydrophobés en y déposant le liant de manière homogène et adhésive, plus ou moins rapidement, en fonction du degré de stabilité desdites émulsions.

La stabilité des émulsions est avantageusement contrôlée par l'intermédiaire des taux d'alcalis présents dans celles-ci, seuls ou en association avec des protéines ou d'autres agents stabilisateurs, ou encore des agents accélérateurs de rupture, tels que, par exemple, MgSO₄, Na₂SO₃ ou les solvants pétroliers. Les taux des accélérateurs et des stabilisateurs, présents dans lesdites émulsions, raccourcissent ou rallongent plus ou moins la durée de cette rupture, qui peut varier dans des plages temporelles importantes.

Les différents accélérateurs de rupture peuvent être, selon leur nature, soit introduits dans l'émulsion d'enrobage ensemble avec la farine protéique, notamment le Na₂SO₃, soit mélangés, sous forme de solutions, au sel basique de chrome trivalent ou au sel acide métallique, pour le MgSO₄ par exemple, ou à l'acide organique à chaîne longue (acide gras), pour les solvants pétroliers notamment, mis en oeuvre pour hydrophober les supports à enrober.

Les sels de chrome ou d'autres métaux, notamment de fer et les acides gras ou ses homologues précités, sont mélangés de manière homogène avec les supports ou granulats à traiter, ces derniers devenant alors aptes à être enrobés valablement et adhésivement par une simple émulsion anionique qui, surstabilisée avec un alcali, avec éventuellement des matières protéiques ou avec un mélange de ces derniers, rend leurs facettes enrobables comme décrit ci-après, en promouvant également l'hydrophobicité.

En vue d'empêcher les fines éventuellement présentes de voleter lors de la manipulation des supports à enrober sous forme de granulats filléreux, il est possible d'imprégner lesdits supports de produits chimiques attirant l'humidité ambiante, tel que, notamment, CaCl₂, associés à un mouillant anionique, n'influençant pas l'hydrophobicité desdits supports, et, le cas échéant, de solvants pétroliers, pouvant contenir, en dilution, l'acide organique à chaîne longue, nécessaire pour hydrophober lesdits supports, le pourcentage en poids dudit ou desdits solvants pétroliers étant compris entre 0,01 à 0,1 % environ du poids desdits granulats. Les produits chimiques précités, tels le CaCl₂, déposent, par leur hygroscopie constante, une pellicule d'eau qui s'interpose, en juxtaposition, non physiquement mouillante pour les granulats hydrophobés, faisant ainsi écran en freinant la formation de poussières.

Le mouillant utilisé dans le cadre de la présente invention est préférentiellement du type C₁₂ dodécyl-2-sulfate, introduit soit dans les émulsions de liants hydrocarbonés au cours de leur fabrication, soit dans les produits chimiques spécifiques, utilisés pour hydrophober les supports, ou encore injectés lors de la mise en contact des liants et des supports. Ces mouillants favorisent la rupture adhésive recherchée de l'émulsion d'enrobage, appliquée sur des granulats hydrophobés, cette action subsistant pour lesdits granulés hydrophobés après séchage.

Conformément à une autre caractéristique de l'invention, les supports, notamment les granulats, sont hydrophobés lors de leur concassage secondaire ou tertiaire, préférentiellement dans les ballastières ou les carrières, permettant, du fait de leur état concassé, pratiquement sec, de limiter, voire de supprimer l'emploi de produits asséchants et de réaliser des supports hydrophobés pouvant être stockés à ciel ouvert, sans risque de se gorger d'eau.

Les solvants pétroliers peuvent être avantageusement mélangés aux acides organiques à chaînes longues, solides à température ambiante, en vue de leur liquéfaction sans apport de chaleur pour un enrobage à froid. Ledit solvant, fortement adsorbé par les granulats hydrophobés constitue, autour de ceux-ci, un film microscopique et agit à la manière d'une liaison assouplissante entre le bitume relativement dur apporté par l'émulsion et le support à enrober, ce tout en accélérant la rupture.

En outre, l'invention permet, en intégrant une usine de fabrication d'émulsion selon le document FR-2 608 185 dans une usine d'enrobage à froid, capable de transformer le bitume à l'arrivée de la raffinerie au rythme de son déchargement en émulsion immédiatement utilisable, présentant une application généralisée, de court-circuiter les opérations coûteuses de l'enrobage à chaud en réduisant sensiblement les investissements et la pollution de l'environnement, en autorisant la mise en oeuvre, dans tous les cas, d'un poste d'enrobage à froid simple, compact et peu polluant.

Ainsi, le procédé selon l'invention dispense les liants d'enrobage - dont les émulsions - d'avoir à promouvoir la faculté adhésive et de rupture aux supports à enrober. L'effet cationique n'est donc plus demandé pour une émulsion d'enrobage, ni le dopage pour les liants non émulsionnés.

Il faut noter que les granulats ainsi hydrophobés peuvent être valablement et adhésivement enrobés par toutes les émulsions, cationiques et anioniques ou amphotères, suffisamment stables vis-à-vis des fines contenues dans les granulats minéraux, tout en ayant une rupture progressive et contrôlable, ce qui est facile pour les émulsions anioniques et reste difficile voire impossible pour les émulsions cationiques classiques.

Soumis à un enrobage à chaud, ces granulats, activés pour attirer préférentiellement les hydrocarbures, peuvent servir à hausser la qualité des enrobés au niveau de celle obtenue pour le revêtement des berges du canal d'Arzwiller, en Lorraine, dont les granulats, avant de passer par le tambour-sécheur, ont été traités par une solution de sels de chrome basique et qui, enrobés, ont été suivis, jour après jour, par le Laboratoire Régional des Ponts et Chaussées de Strasbourg et accusaient constamment le maximum, soit 1, pour l'indice Immersion/Compression DURIEZ.

En ce qui concerne l'enrobage à froid universel proposé par la présente invention, on choisira de préférence les émulsions anioniques, moins coûteuses, facilement fabricables et stabilisables à souhait, dont la rupture adhésive est mise en route par l'état hydrophobe des granulats.

Une émulsion anionique ainsi stabilisée, au point d'être capable d'enrober les fines, si elles étaient prises à part, est forcément à-même d'enrober toutes les formulations pratiquées par l'enrobage à chaud.

La rupture induite par l'hydrophobicité, modulable par n'importe quel moyen à effet progressif, se fait toujours adhésivement. Ainsi, le bitume (de charge électrique négative) que la rupture expulse de l'émulsion, se trouve devant des facettes hydrophobes (à charge électrique positive) dont il devient le premier occupant.

On enrobera donc préférentiellement avec cette émulsion, stabilisable à souhait, mais aussi cassable à volonté, universellement applicable à toutes les formulations granulaires, y compris les plus fillérisées, le cas échéant purs ou vierges, de recyclage ou plus ou moins souillées.

Pour ce qui est de l'obtention de l'hydrophobicité, il a été observé que le produit qui résulte de la réaction de sels basiques de chrome trivalent ou de sels métallique du type FeSO₄7H₂O avec des acides gras, confère aux surfaces sèches qu'il touche, une hydrophobicité permanente, immédiatement exploitable. Ceci est vrai aussi pour d'autres acides organiques, chaînes carbonées longues, comportant plus de 10 atomes de carbone, dont un exemple sont les acides naphténiques.

Pour obtenir cette hydrophobicité dans les conditions de chantier, en présence d'humidité, il est nécessaire de sécher, avant ou après avoir ajouté les produits chimiques spécifiques ou vecteurs d'hydrophobicité aux granulats.

Lors de la réalisation de travaux sur chantier, on utilise généralement des granulats entreposés, sous forme de réserves, à l'air libre et la possibilité de pouvoir mettre en oeuvre des matériaux secs est très faible.

La présente invention permet également de procéder à un enrobage sur des matériaux humides sans avoir à les traiter au moyen d'un tambour sécheur.

Dans le cas de l'enrobage à froid conforme à l'invention, les effets hydrophobants des sels de chrome trivalent basiques, respectivement des sels métalliques, en association avec un acide gras, sont exploités en les ajoutant simultanément ou successivement aux granulats à hydrophober, et en réalisant, si nécessaire, un séchage à froid. La réaction entre ces vecteurs d'hydrophobicité (sels + acides gras) se fait in situ, ce qui conduit à une parfaite hydrophobicité surtout pour les compositions granulaires fillérisées.

Mais la façon la plus rationnelle de procéder consiste à traiter des matériaux secs pour lesquels le faible apport d'eau (env. 0,3 %) par les vecteurs de l'hydrophobicité ne nécessite pas le suivi d'un séchage. Un séchage à froid, quasi instantané, est nécessaire et possible pour les granulations non fillérisées.

En partant de granulats humides, il a été constaté que l'assèchement peut être obtenu, sans nuire à l'hydrophobicité, par l'addition d'un produit qui fixe cette humidité par hydratation, comme par exemple la chaux vive CaO, d'après la réaction: CaO + H₂O = Ca(OH)₂. Néanmoins, des granulats à hydrophober très peu humides ou secs sont préférables.

Cette condition semble être le mieux remplie au moment du concassage, en ballastière ou en carrière. Même si les galets ou les blocs à concasser sont mouillés au départ, le taux d'humidité qu'on retrouve dans les granulats concassés des concassages secondaires ou tertiaires, est pratiquement nul ce qui évite d'avoir à procéder à un séchage ou de limiter ce dernier.

En choisissant la chaux vive comme asséchant, il faut pour éliminer 18 kg d'eau, ajouter 56 kg de chaux vive, d'après la formule:

CaO + H₂O = Ca(OH)₂.

La présence de Ca(OH)₂ dans les granulats hydrophobés, au moment de l'enrobage à l'émulsion anionique, influence la rupture et il faut en tenir compte dans la façon de stabiliser cette émulsion. Toutefois, un stockage prolongé de ces hydrophobés, asséchés à la chaux vive, conduit au carbonate de calcium, sans action chimique sur la rupture de l'émulsion d'enrobage. Elles constituent des fines surajoutées, comme d'ailleurs la chaux Ca(OH)₂, dont on peut tenir compte dans la formulation du squelette des produits à enrober.

Pour une humidité de 0,3 % par exemple, avant addition des vecteurs de l'hydrophobicité, il faut, par tonne de granulats, 9,6 kg de chaux vive, soit environ 10 kg de chaux vive industrielle, ce qui équivaudrait à une fillérisation complémentaire d'environ 1 %. Mais par une organisation rationnelle on peut s'arranger pour que l'hydrophobicité soit acquise sans séchage.

Ainsi, les ballastières ou les carrières, pourvues des moyens nécessaires à l'obtention de l'hydrophobicité, pourraient livrer des compositions granulaires d'enrobage toutes faites, sur commandes des enrobeurs, qui verraient leurs opérations d'enrobage simplifiées au maximum. A la limite, les utilisateurs qui achèteraient l'émulsion d'enrobage avec les granulats hydrophobés, déjà conditionnés, pourraient fabriquer leurs enrobés à froid dans leurs bétonnières ou malaxeurs.

L'entrepreneur peut hydrophober ses granulats lui-même, en achetant ses granulats "sous les concasseurs" et en les hydrophobant à l'arrivée, sans d'abord les stocker à l'air libre. Sachant que le tambour sécheur n'interviendra plus pour déranger ses compositions granulaires, il s'arrangera avec son fournisseur pour avoir toutes faites les compositions granulaires de ses enrobés.

Ainsi, ces produits hydrophobés autorisent toutes les options et introduisent une grande souplesse dans la mise en oeuvre de la technique de l'enrobage bitumineux à froid. Les émulsions cationiques directes de l'art antérieur, que l'on doit adapter à chaque problème d'enrobage, ne sont plus nécessaires et peuvent être remplacées par une émulsion anionique unique pour toute composition granulaire à enrober, ayant un pouvoir d'enrobage universel, l'effet cationique de rupture adhésive, acquis une fois pour toutes, ayant été transféré sur les granulats, qui portent une charge électrique positive.

Cette souplesse se retrouve dans de garder les la possibilité granulats hydrophobés en stock, à ciel ouvert; ce qui donne à l'entrepreneur l'occasion de meubler les temps morts par leur fabrication prévisionnelle.

Quant à la conclusion, généralement trop hâtive, concernant d'éventuelles nuisances dues aux sels de chrome, il est rappelé qu'il s'agit exclusivement de sels de chrome trivalent qui, de plus, sont rendus insolubles dans les étapes du procédé selon l'invention. Il est, en outre, rappelé à ce sujet que ce sont les mêmes sels qui servent constamment depuis plus d'un siècle au tannage des cuirs. Or ces cuirs tannés au chrome nous entourent de toutes parts, en privé et en public, où ils subissent une usure constante dont nous respirons les poussières, des vies entières, sans dommages. De plus, conformément à l'invention, on réalise une protection par l'enrobage bitumineux qui élimine les poussières et empêche toute dilution aqueuse, de la même manière que les résidus de goudron de houille sont actuellement neutralisés par la couche de bitume de l'enrobage des granulats de recyclage.

Il est également rappelé que les concassés ou granulats hydrophobés selon l'invention peuvent également constituer les supports d'enrobés à chaud, en leur conférant une qualité quasi indestructible en présence constante d'eau. Les granulats hydrophobés supportent, en effet, les hautes températures rencontrées dans les tambours sécheurs de l'enrobage à chaud (températures supérieures à 200° C), sans perdre leur propriété adhésive. Ainsi, on obtient facilement un indice I/C DURIEZ maximum, égal à 1, et le coût de l'obtention de l'hydrophobicité est pratiquement rattrapé par les économies de fuel réalisées sur les granulats hydrophobés qui sont traités par le tambour sécheur sans pratiquement avoir apporté de l'eau à évacuer.

Les produits obtenus par l'intermédiaire du procédé conforme à l'invention sont, comme indiqué ci-dessus, principalement constitués par des supports rendus hydrophobes, sous forme de granulats purs ou vierges, recouverts, le cas échéant, d'un liant hydrocarboné, du type bitumineux.

Néanmoins, les supports peuvent également se présenter, soit sous la forme de granulats non lavés, rendus aptes à l'enrobage par leur traitement hydrophobe, soit, de manière avantageuse au point de vue économique, sous la forme de granulats recyclés, provenant d'anciens revêtements routiers.

L'invention peut également trouver des applications dans d'autres domaines.

En effet, l'hydrophobicité obtenue selon l'invention n'est pas destinée exclusivement à l'enrobage bitumineux, mais elle est praticable sur des surfaces autres que les surfaces minérales, à savoir notamment les surfaces ligneuses.

Les sciures de bois, par exemple, sont susceptibles d'être hydrophobées, plus simplement encore que les granulats minéraux. En effet, puisque les sciures de bois contiennent généralement plus que la quantité nécessaire d'acides gras, il suffit d'y ajouter uniquement les sels de chrome ou de fer pour obtenir leur hydrophobicité. Comme elles attirent alors fortement les hydrocarbures, sous toutes leurs formes (même l'huile de paraffine), elles peuvent être utilisées pour l'assainissement des eaux polluées par les hydrocarbures.

Les sciures de bois hydrophobées, non recouvertes de liant bitumineux, peuvent donc être proposées comme dépolluants pour les eaux contaminées par des hydrocarbures ou d'autres huiles, et être mises en oeuvre dans la lutte anti-pollution par les pompiers ou des forces de protection civile similaires, constituant même après stockage à l'air libre ainsi une valorisation commerciale supplémentaire.

Le phénomène est spectaculaire lorsqu'on arrive à allumer les hydrocarbures ramassées par la sciure de bois rendu hydrophobe, flottant sur l'eau. La sciure fonctionne comme une mèche, sans brûler elle-même, pouvant même être récupérée pour resservir, ses qualités hydrophobes restant intactes.

Cette solution peut être proposée en vue de combattre les catastrophes dues à des navires pétroliers en mer, en allumant sur l'eau les hydrocarbures, retenues par la sciure de bois ou d'autres matériaux hydrophobés plus légers que l'eau, tels que les expansés minéraux par exemple.

Les différentes variantes d'applications du procédé conforme à l'invention, décrites ci-dessus, résolvent donc d'une façon globale et pratique les problèmes de l'enrobage bitumineux en général et ceux de l'enrobage à froid aux émulsions en particulier.

Il est rappelé que l'émulsion anionique, respectivement amphotère, à la base du procédé selon l'invention, est constituée des qualités de bitumes, employés en enrobage à chaud, donc non coupés de solvants.

Il est intéressant, à ce sujet, de consulter la publication du Ministère Français de l'Aménagement du Territoire, de l'Equipement et des Transports, sous le titre: "Les émulsions de bitume" Spécial W, publiée en 1974. Une réédition actuelle ne pourrait pas encore présenter une émulsion cationique dont les performances pourraient se mettre en parallèle avec celles de l'enrobage à chaud.

Il est toujours encore nécessaire, dans la technique de l'enrobage à froid aux émulsions cationiques directes, de procéder à des recherches d'émulsifiants capables de résoudre les problèmes de la pratique des chantiers. Trop de facteurs forcent à ce choix, comme la qualité du bitume à émulsionner, la nature minéralogique des granulats employés et surtout la nature et le degré de fillérisation des granulats proposés à l'enrobage, (voir document "Spécial W" ci-dessus, pages 6 et 26). Il suffit pour cela de lire, à la page 36 dudit document "Spécial W", la méthode d'adaptation d'une émulsion cationique, nécessitant des recherches fastidieuses presque pour chaque cas d'enrobage. Même si des progrès ont pu être faits depuis, une généralisation de l'enrobage à froid telle que proposée dans le cadre de la présente invention, avec l'aide d'un seul type d'émulsion, n'est pas encore en vue pour les enrobages à l'émulsion cationique.

En conséquence, il ne semble pas exister, en se référant aux émulsions cationiques, d'émulsion à usage universel.

Par contre, comme indiqué plus haut, l'invention permet d'obtenir une émulsion à usage universel en partant d'une émulsion anionique qui, par un cheminement détourné, soit en la rendant cationique - ce qui la place déjà plus avant dans les possibilités des émulsions cationiques de fabrication directe - soit en abandonnant sa transformation cationique, en la remplaçant par une émulsion anionique stabilisée à point, mais pouvant être amenée à une rupture adhésive - cationique pour ainsi dire - sur des granulats hydrophobés, que la lecture du document "Spécial W" précité pourrait faire croire techniquement irréalisable.

Une preuve que l'obtention de l'hydrophobicité selon l'invention, peut être assimilée à une action cationique est apportée par les plaquettes de commercialisation de sels de chrome trivalent basiques de la société BAYER, Leverkusen, qui offre à la vente ces sels pour le tannage des cuirs, en désignant ce tannage comme étant une action cationique. La réaction de sels de chrome trivalent basiques, avec un acide organique à chaîne longue, est de même nature.

Une autre application importante du procédé conforme à l'invention concerne le réemploi des débris de tapis bitumineux déposés.

La réduction en granulats de ces déchets fournit la matière de recyclage et les utilisateurs de ces matériaux savent, qu'au premier abord, ces émulsions ne les mouillent pas, parce qu'ils sont de nature hydrophobe de par la pellicule de liant hydrocarboné qui subsiste, de manière fortement encollée, sur ces supports.

Ces derniers constituent des matériaux prêts à l'enrobage adhésif avec l'émulsion anionique "superstabilisée" ou "surstabilisée", à rupture contrôlée, selon l'invention. Comme leur granulométrie a toujours besoin d'être corrigée et adaptée à la formulation prévue, ceci pourra être réalisé par un apport de granulats, également hydrophobes, qui sont ceux obtenus par l'intermédiaire du procédé selon l'invention et qui apportent l'effet cationique dont profitent les granulats recyclés ou tout simplement en les hydrophobant conformément à l'invention.

Toutes les combinaisons granulaires sont possibles et on tentera de suivre la pratique actuelle qui consiste à introduire un maximum de produits de recyclage, qui peut dépasser 80 % en poids. Ce maximum n'implique aucune adaptation mécanique de l'installation d'enrobage, ce qui n'est pas le cas pour un recyclage en enrobage à chaud.

Un autre facteur important est le conditionnement et le transport des enrobés aux émulsions, ainsi que leur mise en place.

Ces problèmes sont déterminés par le pourcentage d'eau que contiennent les enrobés à la sortie du malaxeur et par le mode de rupture imposé. La maîtrise de cette rupture, notamment en présence des fines des formulations à chaud, est malaisée, sinon impossible pour les émulsions cationiques directes, mais peut être réalisée aisément pour l'émulsion à usage universel selon l'invention.

Ainsi, pour les formules: enrobés denses - bétons bitumineux par exemple, l'addition de l'émulsion conforme à l'invention, sans supplément d'eau, fournit un enrobage complet dans un malaxeur de force, mais à grains séparés, difficile à compacter, ayant l'aspect d'un enrobage à chaud et la même ouvrabilité, avec l'avantage de pouvoir être transporté par les mêmes camions que l'enrobé à chaud et de pouvoir être mis en place par les finisseurs de l'enrobage à chaud. Cette forme d'enrobage à froid serait idéale - vraiment le parallèle de l'enrobage à chaud - si les difficultés de compactage pouvaient être surmontées.

Un supplément d'eau de l'ordre de 5 % en poids des granulats fournit des enrobés un peu pâteux, déjà plus difficiles à transporter et à manipuler. Dans ce cas il faut s'inspirer des techniques de fabrication et de mise en place des coulis et des revêtements minces, voire celles des bétons de ciment.

Un supplément d'eau d'environ 10 % conduit à la fluidité qu'on connaît pour les coulis. Ils sont transportables aux distances connues pour les enrobés à chaud et supportent des temps d'attente. La manipulation d'un tel matériau impose un malaxage pendant le transport, avec l'avantage de raccourcir et de simplifier le train de mise en place actuel des coulis. Il suffit en effet de prévoir l'accrochage du traîneau de répartition aux camions transporteurs qui se relaient.

Cette technique permet une pose rapide de tapis bitumineux minces, en appliquant une fluidité confortable, facilitant une compaction rapide sans perte d'émulsion par écoulement.

Il est rappelé que toutes les épaisseurs de tapis pratiquées par l'enrobage à chaud sont possibles dans l'exécution normale du procédé décrit ci-dessus. Les temps de rupture se situent dans les délais normaux de la durée du cylindrage pratiquée pour l'enrobage à chaud. Le cylindrage des tapis posés à froid ne devrait pas s'étendre au-delà du temps que met l'émulsion à rompre, notamment aux basses températures. Ces points communs entre l'enrobage à chaud et l'enrobage à froid réalisés dans le cadre de la présente invention sont importants.

En résumé, le procédé d'enrobage bitumineux généralisé selon la présente invention vise notamment l'enrobage à froid, en débarrassant les émulsions des principales contraintes obligeant les entrepreneurs à les adapter aux multiples variables, rencontrées sur les chantiers travaillant les liants bitumineux. Il remplace surtout les émulsions cationiques qui sont hyper-sensibles à l'origine minérale des granulats, à leur propreté, à leur composition granulaire et leur degré de fillérisation, à la qualité et la quantité des fines d'apport, etc.

Au lieu d'adapter les émulsions à l'infinie variabilité des conditions d'enrobage et de chantiers, le procédé selon l'invention va plus loin et adapte tous les granulats à toutes les formes de liants bitumineux, dont les émulsions.

Pour rendre possible cette généralisation de l'enrobage bitumineux, universellement adhésif, les granulats destinés à un enrobage bitumineux, sont traités par des produits hydrophobants, capables de transférer l'effet spécifique de rupture adhésive des émulsions cationiques sur les granulats. Il suffit alors d'amener n'importe quel liant bitumineux, avec une fluidité adéquate, aux granulats hydrophobés destinés à l'enrobage et, en ce qui concerne les émulsions, à les faire rompre pour que le bitume se dépose avec la garantie d'une adhésivité maximale. Cet effet est obtenu par une émulsion dans laquelle le bitume porte une charge électrique négative, les granulats étant porteurs d'une charge électrique positive.

Le procédé d'obtention de l'hydrophobicité selon l'invention ne fait pas de distinction entre les granulats acides et basiques ou siliceux et calcaires et n'est pas influencé par la qualité ou la quantité de fines présentes. Il ne fait pas non plus appel à des appareils de chauffage et de séchage. Ces opérations - si nécessaires - se font également à froid.

Tous les liants bitumineux, amenés en contact avec les surfaces hydrophobées, s'y encollent adhésivement, en sorte que ces enrobés, placés sous l'eau et soumis à une ébullition prolongée, ne perdent pas leur enrobage. Les indices I/C DURIEZ atteignent ou tendent vers leur valeur maximum, à savoir 1.

Ainsi débarrassés des soucis de mise en route de la rupture des émulsions et de l'encollage adhésif des liants sur leurs supports, il convient, pour les enrobages aux émulsions, de maîtriser la durée de cette rupture et de l'adapter aux circonstances rencontrées sur les chantiers et les postes d'enrobage. Cette adaptation doit se faire avec une émulsion "superstabilisée", capable de mouiller toutes les formulations granulaires, avant d'entrer en rupture.

Sachant que les émulsions cationiques de fabrication directe ne peuvent répondre à tous ces critères à la fois (voir à ce sujet le document "Spécial W"), il est fait appel à une émulsion anionique, capable de la stabilité requise et dont la rupture est initiée par l'hydrophobicité et la charge positive des granulats.

La stabilité de l'émulsion anionique peut être graduée par un taux variable en alcalis. En utilisant comme agents stabilisateurs les protéines, presque tous les produits chimiques peuvent entrer dans une telle émulsion amphotère sans la détruire, celle-ci pouvant exister sous n'importe quel P_{H}.

Parmi ces produits chimiques il en est qui, au contact des granulats développent une tendance à une rupture supplémentaire, renforçant celle induite par les granulats hydrophobés.

Cette faculté d'influencer la rupture appartient à beaucoup de substances parmi lesquelles se distinguent, par leur efficacité et leur spécificité, par exemple, le sulfate de magnésium MgSO₄, le sulfite de sodium Na₂SO₃ et le mouillant C₁₂ Dodécyl-2-sulfate.

L'effet de MgSO₄ est explicable par sa capacité de précipitation de l'émulsifiant anionique - en général un naphténate ou le sel d'un acide gras - formant un adhésif en plus. L'état "émulsion" n'est alors plus maintenu que par les protéines, mais se maintient à tous les P_{H}.

L'effet du mouillant sera explicité plus loin dans la description.

L'effet du sulfite peut être montré par une simple émulsion anionique à laquelle on ajoute du Na₂SO₃, sans protéines. La rupture sur des granulats non hydrophobés est spectaculaire, mais non adhésive. Cet effet de rupture qui persiste pour une émulsion amphotère est corrigé par l'effet adhésif des granulats hydrophobés.

Les deux effets seraient cumulés dans le MgSO₃ s'il existait dans le commerce. Obtenu par la réaction MgSO₄ + Na₂SO₃ = MgSO₃ + Na₂SO₄, mis en déséquilibre, tantôt par un excès de MgSO₄, tantôt par un excès de Na₂SO₃, il rend possible un contrôle précis de la rupture.

Ainsi l'obtention de l'hydrophobicité des granulats lève de lourdes hypothèques qui pèsent sur les émulsions destinées à l'enrobage bitumineux à froid.

En effet, au lieu d'avoir à apporter les moyens de rupture adhésive sur les granulats non hydrophobés et d'avoir à distinguer entre la provenance et la composition granulaire, l'émulsion d'enrobage est libérée de ces fonctions et n'assure que le contrôle de la rupture et de la stabilité.

L'acquis par ces émulsions de ces degrés de liberté a des conséquences techniques et économiques importantes qui dépassent le cadre du domaine de l'enrobage à froid.

Les effets favorables peuvent déjà commencer en carrière ou en ballastière, comme cela a été décrit plus haut.

La fourniture par les producteurs de granulats de matériaux hydrophobés, s'adresse tout aussi bien aux enrobeurs à chaud qu'aux fabricants d'enrobés à froid et permet un stockage à ciel ouvert, sans que ces granulats hydrophobés deviennent humides, voire mouillés.

Ces résultats sont possibles par le fait que l'hydrophobicité acquise met tous les granulats minéraux, quelle que soit leur provenance, sur un pied d'égal comportement devant toute forme de liant bitumineux.

En ce qui concerne le liant sous forme d'émulsion, il peut être réalisé à usage universel, puisque les granulats hydrophobés réagissent tous, malgré leurs origines minéralogiques différentes, d'une manière égale devant une émulsion et demandent, à granularité égale, la même dose de liant.

Le choix du type d'émulsion qui doit convenir à toutes les granulations, ouvertes ou fermées, est donc important. Il a été trouvé que l'émulsion anionique, stabilisable à volonté, a la plus grande souplesse d'adaptation.

Contrairement à l'émulsion cationique de fabrication directe, son degré de stabilité peut être modulé d'une façon précise et dans de larges limites, par son taux d'alcalinité, associé éventuellement, à un faible taux de protéines ou autres stabilisateurs connus.

L'emploi d'un taux élevé d'alcalis, sans avoir recours à des protéines, a une influence marquée sur la rupture qui devient plus incisive, ce qui permet de fabriquer des coulis à rupture ultra-rapide. En cas d'emploi de protéines non cationisées, celles-ci ne serviraient donc plus qu'à moduler la stabilité de l'émulsion, sur la rupture de laquelle on peut encore avoir une influence par des accélérateurs du type MgSO₄ et Na₂SO₃, déjà cités plus haut, auxquels s'ajoutent les solvants pétroliers qui servent en même temps à diluer les acides organiques, aptes à servir de vecteurs hydrophobants, ceux que l'état solide ne permet pas d'introduire dans les granulats, tels que la stéarine ou les acides naphténiques trop pâteux, alors que l'oléine par exemple est fluide à la température d'obtention de l'hydrophobicité.

En ce qui concerne la fabrication de l'émulsion d'enrobage, il n'est plus aussi impératif d'ajouter les protéines à une émulsion refroidie en-dessous de 70° C, comme prévu dans la conception de l'usine d'émulsion du document FR-2 608 185. Dans le cadre de l'invention, l'addition des protéines peut se faire en même temps que l'eau émulsifiante, ce qui amorce une faible hydrolyse, produisant des peptides à poids moléculaires plus faibles, mais qui sont tout aussi capables d'assurer la stabilité recherchée pour l'émulsion d'enrobage.

Quant à l'élaboration d'un enrobé conservable pendant quelques jours pour les emplois partiels et le rebouchage des fouilles, il peut être obtenu en ajoutant, sur un enrobé à grains séparés, qui résulte d'un enrobage à l'aide d'une émulsion à base d'un bitume dur, un solvant, à raison d'environ 0,2 % du poids de l'enrobé.

Le problème de la poussière en enrobage à chaud aurait pu devenir celui de l'enrobage à froid à l'aide de granulats hydrophobés.

En effet, ces granulats repoussent l'humidité en permanence et les fines toujours sèches, peuvent voleter au gré des courants d'air. La manutention obligatoire de ces matériaux soulèverait de ce fait ces poussières et polluerait le chantier, ce qu'il faut empêcher à la source.

L'asséchant idéal pour chasser l'humidité serait un produit chimique qui, dans un premier temps, attire sur lui l'humidité ambiante, ce qui revient à un assèchement, mais qui, en fin de réaction, reste humidifiant, et promouvoit ainsi une juxtaposition d'humidité renaissante sur des granulats hydrophobés, freinant le vol de la poussière.

Sachant que l'hydrophobicité obtenue par applications séparées d'un sel de chrome basique, respectivement d'un sel métallique, notamment de fer, et d'un acide gras est acquise dès que ces vecteurs, bien homogénéisés dans la masse des granulats, ont passé - ne serait-ce qu'un moment - par un état de siccité, il a été trouvé que le chlorure de calcium CaCl₂ permettait d'obtenir ce résultat.

Il est bon à cet effet de l'associer à un mouillant anionique du type C₁₂Dodécyl-2-sulfate, pour O,2 % de CaCl₂ et 0,02 % de mouillant par rapport au poids des granulats, sachant que les excès dans l'emploi de ces produits ne compromettent pas l'obtention de l'hydrophobicité. L'emploi de mouillants du type C₁₂Dodécyl-2-Sulfate dans les étapes de l'invention, aboutit à une variante du procédé, en ce que, même employé seul, il agit sur la rupture, sans l'aide des produits chimiques indiqués plus haut, produits qui peuvent toutefois lui être associés pour obtenir ladite action.

L'avantage supplémentaire consiste en ce que, sans séchage, l'effet de rupture apparaît plus nettement en ajoutant ce mouillant dans les granulats non séchés et homogénéisés avec les vecteurs de l'hydrophobicité

Le mouillant peut être apporté par la solution de sels de chrome respectivement de fer, définie plus haut, dans laquelle il est dissous à raison de 1 à 2,5 % du poids de ladite solution ou par l'émulsion, dans laquelle il est dissous à raison de 0,04 à 0,1 % du poids de la solution, ou être ajouté sur les granulats qui tournent dans un malaxeur.

D'autres problèmes mineurs naissent lors du compactage des tapis posés. Là où en enrobage à chaud le compactage se fait par cylindrage au cours du refroidissement de l'enrobé mis en place, en enrobage à froid la compactibilité maximale possible est presque acquise d'emblée par les granulats enrobés qui baignent dans l'eau, présente en surabondance et qui est meilleur lubrifiant que le liant chaud, présent en quantité juste nécessaire.

Tant que la rupture de l'émulsion n'est pas achevée, la mise en place compacte des granulats est pour ainsi dire assurée par cet excès d'eau et le cylindrage est secondaire.

Lorsque la rupture est terminée, les sphérules de bitume se touchent intimement ainsi que les facettes des granulats, sans encore former une masse compacte. Vue la dureté du bitume à la base de l'émulsion d'enrobage et l'efficacité de l'adhésion de ce bitume à ces facettes, le tapis offre, à partir de ce moment, une résistance au compactage d'autant plus forte que le bitume est plus dur et que la rupture est plus avancée. Le cylindrage lourd doit alors être évité et le temps et la circulation achèveront le compactage. La petite dose de solvant éventuellement introduit dans les granulats, joue ici un rôle très efficace de liaison et d'activation de la rupture.

Il a également été constaté, notamment lors d'une rupture rapide, que l'affermissement considérable des tapis, sous l'effet de la rupture de l'émulsion, n'est pas uniquement le fait de l'encollage, mais est précédé par une prise de masse, due à un phénomène de contraction, causé par la rupture qui resserre les contacts. Un cylindrage trop lourd et trop poussé pourrait disloquer ce premier raffermissement et constituerait un inconvénient. Le meilleur compactage est alors la circulation que ce raffermissement est capable de supporter rapidement.

Il est indiqué à titre d'exemples, une formule de fabrication d'une émulsion d'enrobage, un mode d'obtention de l'hydrophobicité et un procédé d'enrobage bitumineux à froid à l'émulsion précité.

L'émulsion à capacité d'enrobage universel est obtenue de préférence dans l'usine d'émulsion de notre conception et décrite dans les documents FR-2 608 185, FR-2 608 645 et FR-2 612 214.

Cette usine est mobile et.peut suivre les chantiers et s'intégrer dans un poste ou une usine d'enrobage à froid. Le bitume est dosé avec les appareils précis de l'enrobage à chaud. Il arrive, acidifié en raffinerie, avec un indice d'acide compris entre 1,8 et 2,5 mg KOH/g et peut être fourni sans augmentation de son prix. Son potentiel de calories sert au réchauffement de l'eau sodée émulsifiante qui contient par exemple 0,2 à 0,5 % en poids de NaOH, l'effet émulsifiant étant obtenu à partir de 0,15 % en poids de NaOH.

Sous l'effet du mouvement de la pompe centrifuge placée dans le bac de ladite usine et surtout par la réaction de saponification entre les acides incorporés ou naturellement contenus dans le bitume chaud, une émulsion anionique mère se forme spontanément, sans l'action d'un moulin colloïdal, pourvu que les températures limites données par la formule pratique : température bitume + température eau 220° C, soient respectées.

En référence aux dessins accompagnant le document FR-2 608 185, cette émulsion est refoulée dans le premier bac de refroidissement (et de réchauffement de l'eau) par une pompe centrifuge. Après avoir passé les deux autres bacs de refroidissement 2 et 3, l'émulsion est, soit refoulée sur les granulats, dosés en conséquence, soit mise en attente dans des réservoirs. Le taux de farine protéique est de l'ordre de 0,8 % par rapport au poids de l'émulsion pour les températures ambiantes de 2° C à 15° C et peut être portée à 1,2 % pour les températures estivales, lorsqu'il s'agit de transformer une émulsion anionique en émulsion cationique.

Ces pourcentages valent pour les protéines végétales représentées par les farines de tourteaux de plantes oléagineuses. Pour leur stérilisation 0,1 à 0,3 % de paraformaldéhyde sont nécessaires, alors que pour les coulis à rupture ultra-rapide, le taux de protéines peut être réduit à 0,4 % par exemple et le taux de NaOH élevé au maximum toléré par l'émulsion-mère anionique.

Ainsi, à titre d'exemple, on ajoute à 450 kg d'eau à 40 à 50° C, contenant 1,35 kg de NaOH, soit 0,3 %, 550 kg de bitume acidifié, et accusant une température de 160° C à 170° C. Ces opérations sont faites en usine d'émulsion sous contrôle électronique.

A cette émulsion encore chaude sont ajoutés 8 kg de farines protéiques par exemple, ayant un taux de protéines compris entre 45 et 50 % et 100 g à 200 g de paraformaldéhyde, toujours sous contrôle électronique, si l'émulsion est faite dans l'usine mentionnée ci-dessus, en vue de sa transformation en émulsion cationique ou amphotère.

En ce qui concerne l'obtention de l'hydrophobicité, il est à noter que les taux des vecteurs de l'hydrophobicité sont fonction de la surface des granulats. On choisit pour le présent exemple des granulats secs issus d'un broyage spécifique en "rollobar", qui réduit les concassées invendus sans fines et produit des granulats contenant plus de 17 *%* de fines, présentant par conséquent une surface exceptionnellement grande à hydrophober.

A 1000 kg de ces granulats secs on ajoute, dans un malaxeur de force, 1 kg de sulfate de chrome basique trivalent commercial, tel qu'il est utilisé par les tanneries, après l'avoir dilué dans 3 litres d'eau. Pour les sels de fer du type FeSO₄7H₂O, on utilise 1,2 kg dissous dans 3 litres d'eau.

En même temps on ajoute 0,4 à 0,8 kg d'oléine commercial ou d'acide naphténique dilué dans environ leur poids d'un solvant pétrolier.

Après homogénéisation, l'hydrophobicité est acquise et les granulats pourraient être entreposés à ciel ouvert, sans qu'ils se gorgent d'eau. Il pourrait aussi être procédé à leur enrobage par l'émulsion décrite précédemment, dans le même malaxeur d'homogénéisation des vecteurs hydrophobants. Pour une humidité primaire de 0,3 % en poids par exemple, il faudrait assécher par 10 kg de CaO ou 3 kg de CaCl₂ ou 3 kg de MgSO₄ anhydre. Pour être sûr que les granulats, quasi secs au départ, ont bien passé par un moment de franche siccité et pour qu'ils soient protégés contre le vol de poussière, il est préférable d'ajouter 1 à 5 kg de CaCl₂.

Aux 1000 kg de granulats hydrophobés décrits ci-dessus, tournant dans un malaxeur, on ajoute, en vue de réaliser l'enrobage, 0 à 125 litres d'eau et 125 kg de l'émulsion à 55 % dont la fabrication a été décrite et on vérifie que la rupture et la maniabilité correspondent bien aux besoins des chantiers à desservir.

En vue d'une accélération minimum de la rupture, cadrant avec une émulsion d'enrobage universelle, on peut ajouter une certaine quantité de MgSO₄7H₂O dans la solution de sulfate de chrome basique qui est capable d'en absorber 20 % de son poids à 12° C, sans signe de dépôt d'insolubilité.

Ainsi dans l'exemple précédent, en ajoutant 4,8 kg de cette solution, ce qui revient à ajouter 0,8 kg de MgSO₄7H₂O aux 125 kg d'émulsion, on ajoute environ 0,6 % de MgSO₄ anhydre par rapport au poids du bitume.

De manière surprenante, l'obtention de l'hydrophobicité n'en est pas dérangée et le tas de granulats ainsi hydrophobé protège le MgSO₄ - comme il protégerait le CaCl₂, qui pourtant attire d'une manière continue l'humidité de l'air ambiante et semble, en apparence du moins, mouiller les produits hydrophobés.

Ces derniers sont donc capables de maintenir en juxtaposition des produits chimiques solubles dans l'eau et de les maintenir en réserve pour une action à venir.

Les granulats hydrophobés qui semblent mouillés par l'attirance constante d'humidité par le CaCl₂, ne le sont qu'en apparence et continuent de refuser toute eau supplémentaire ajoutée.

Au moment de l'enrobage à l'émulsion, ces produits, protégés au milieu des granulats hydrophobés, deviennent actifs et le MgSO₄ par exemple, peut jouer son rôle d'accélérateur de rupture. Les taux des accélérateurs peuvent varier suivant la conception de l'émulsion d'enrobage et son équilibrage.

Cette façon de faire pourrait s'étendre à d'autres produits susceptibles de jouer un rôle utile pour l'enrobage, pourvu qu'ils n'empêchent pas l'obtention de l'hydrophobicité. Parmi ces produits utiles on peut citer les solvants.

Ainsi, la présente invention permet la réalisation d'un procédé d'enrobage généralisé pouvant être mis en oeuvre à chaud ou à froid.

En effet, au lieu de forcer les liants bitumineux et leurs émulsions d'avoir à apporter eux-mêmes la capacité d'enrobage adhésif à leurs supports, tout en créant les bonnes conditions de leur maniabilité, le procédé selon l'invention affranchit ces liants de ces sujétions souvent délicates à réaliser, en adaptant d'une manière définitive et univoque tous les supports à tous les liants et formes de liants qui n'ont plus à être ni dopés pour les non émulsionnés, ni rendus cationiques pour ce qui concerne les émulsions.

Pour ce faire, les supports à enrober sont hydrophobés, c'est-à-dire rendus capables de repousser l'eau et l'humidité et de rester secs sous les intempéries, ce qui permet de les stocker à ciel ouvert sous une forme qui n'apporte plus d'eau à évaporer dans les tambours sécheurs, réduisant d'autant la consommation de fuel et, par conséquent, la pollution de l'atmosphère.

Il suffit pour cela de sécher une seule fois les produits chimiques spécifiques sur leurs supports pour que l'hydrophobicité apparaisse et reste acquise. Ce séchage ne se fera plus par chauffage, mais à froid, à l'aide de produits chimiques adéquats peu coûteux et avides d'eau, évitant ainsi le séchage par tambour sécheur ou par four aux micro-ondes et permettant l'enrobage immédiat ou à terme desdits supports.

Cette hydrophobicité met les supports à enrober - sans distinction de provenance ou de conditionnement granulaire - à égal comportement devant chaque liant ou forme de liant, pris séparément. Il suffit de mettre ce liant chaque fois en condition de fluidité adéquate et, en ce qui concerne les émulsions, de les stabiliser à point et de les acheminer vers une rupture progressive.

Chaque liant ou forme de liant convient à chaque support hydrophobé et l'émulsion reste égale à elle-même, sans avoir à l'adapter aux granulats par changements d'émulsifiants.

Par l'emploi de certains mouillants, les granulats, homogénéisés avec les vecteurs hydrophobants, peuvent être valablement et adhésivement enrobés par l'émulsion stabilisée selon l'invention, sans avoir à les sécher préalablement.

Conformément à une variante de réalisation de l'invention, le procédé décrit ci-dessus peut également consister, après addition séparée ou simultanée des deux produits chimiques spécifiques sur les supports à hydrophober, à réaliser un assèchement très rapide de ces derniers au moyen d'un mélange de ciment et de chaux, intégré de manière homogène dans la masse de supports et de granulats soumis au traitement hydrophobant, lesdits supports acquérant ainsi également une charge électrique positive.

En effet, il a été possible d'accélérer l'acte hydrophobant en exploitant les caractéristiques exceptionnelles propres aux mélanges de ciments et de chaux, à savoir, leur fort pouvoir hydratant, leur permettant d'absorber rapidement l'humidité avec laquelle ils sont mis en contact.

Si un mélange de ciment fondu et de chaux est absolument prohibé et contre-indiqué dans la technique des bétons de ciments, il ne dérange pas dans les bétons bitumineux où il n'est pas fait appel à la valeur liante et raidissante du ciment et de la chaux, mais où les fines créées par ces mélanges, en sus de celles déjà présentes dans les granulats, stabilisent les bétons bitumineux. Il convient alors de tenir compte de ce filler supplémentaire lors de la formulation des enrobés à froid.

Il a été trouvé qu'un mélange par exemple d'environ 80 % de ciment fondu et d'environ 20 % de chaux, en poids, accélère grandement le processus pour accéder à l'hydrophobicité, qui, avant même que la totalité de l'humidité contenue dans les granulats soit transformée en eau hydratée, fait surnager ce restant d'eau sur les granulats, sans physiquement les mouiller, et repousse toute autre eau ajoutée.

Cette propriété empêche ainsi d'emblée les fines de former des nuages de poussière, phénomène combattu comme décrit ci-dessus par d'autres moyens spécifiques.

L'avantage de l'apparition précoce de l'hydrophobicité va par conséquent de pair avec une économie substantielle des agents hydrophobants, à savoir les sels de chrome ou de fer et l'acide organique à chaîne longue décrits ci-dessus.

Les mélanges ciments-chaux apportent d'autres avantages qui consistent, notamment, à fixer le sel acide - de préférence le sulfate de fer ou le sulfate de chrome - sur les agrégats ou granulats avant que l'alcali de stabilisation de l'émulsion vienne se combiner à la chaux apportée par le mélange ciment-chaux. En choisissant, en tant qu'alcali, le carbonate de sodium par exemple, cette chaux, avec l'aide aussi du CO₂ de l'air, se transforme en calcaire CaCO₃ qui constitue le filler idéal pour les enrobés bitumineux, à prévoir d'ailleurs obligatoirement selon les prescriptions de certains pays comme, par exemple, les Pays-Bas.

Il suffit que le couple acide gras ou similaires (oléine par exemple)/acide métallique (sulfate de fer ou sulfate de chrome par exemple) soit asséché - ne serait-ce qu'un instant - sur les supports ou granulats pour que l'hydrophobicité apparaisse et soit acquise une fois pour toutes. Cette tendance est fortement accusée avec l'emploi d'un mélange ciment-chaux.

Il est en effet techniquement souhaitable que cet acte de séchage ne soit pas un chauffage (tambour-sécheur) ou encore moins un séchage lent sous abri à la température ambiante, mais qu'il s'accomplisse au rythme même du déroulement de l'enrobage à froid sur des granulats acquérant ainsi une charge positive.

Il a été trouvé que l'hydrophobicité est acquise par des taux de mélanges ciment-chaux qui sont inférieurs à leur capacité d'hydratation. Ainsi il est possible, dans l'état actuel des recherches des demandeurs, d'hydrophober des granulats contenant plus que le double du poids en eau que celui du mélange ciment-chaux employé.

Il s'agit alors de supports ou granulats dotés d'une charge électrique positive dont l'hydrophobicité fait qu'ils attirent de préférence les liants bitumineux, plutôt que l'eau.

Dans ces conditions l'enrobage aux bitumes classiques et aux cut-backs est facilité et ne présente pas de difficultés particulières, étant remarqué que ces supports ou granulats hydrophobes, éventuellement entreposés à ciel ouvert et exposés aux intempéries, ne se gorgent pas d'eau, qui n'a donc plus besoin d'être évaporée au moyen de tambours-sécheurs.

Quant à l'enrobage à froid, l'émulsion anionique, dont le bitume est chargé négativement, est toute indiquée. Il suffit qu'elle ait une stabilité suffisante pour envelopper ces agrégats hydrophobes avant d'entrer en rupture, tel que décrit précédemment.

Les signes opposés des charges des granulats, d'une part, et des globules de bitume de l'émulsion anionique, d'autre part, provoquent la même rupture adhésive que celle qu'on obtient avec les émulsions cationiques, chargées positivement, en réaction avec les siliceux chargés négativement.

## Revendications

1. Procédé d'enrobage, destiné à fixer adhésivement des liants plastiques et élastiques, soit sous forme fluidifiée, du fait de la chaleur ou de solvants, soit sous forme émulsionnée, sur des supports, notamment du type granulats, caractérisé en ce qu'il consiste principalement à prétraiter les supports à enrober, en les rendant hydrophobes et porteurs d'une charge électrique positive sous l'action de deux produits chimiques spécifiques, à savoir, d'une part, un sel acide métallique, et, d'autre part, un acide organique à chaîne longue, de manière à uniformiser leur comportement en regard de tous les liants à chaud ou à froid, et sous toutes leurs formes, à leur conférer la capacité d'attirer ces liants, préférentiellement à l'eau, et à mettre lesdits liants en contact avec ces supports hydrophobes, en vue de leur dépôt adhésif et homogène sur lesdits supports.

2. Procédé d'enrobage selon la revendication 1, caractérisé en ce que l'hydrophobicité des supports à enrober est obtenue par l'action de deux produits chimiques spécifiques, à savoir, le sulfate de fer FeSO₄7H₂O, et un acide gras ou naphténique.

3. Procédé d'enrobage selon la revendication 2, caractérisé en ce qu'il consiste, après addition séparée des deux produits chimiques spécifiques sur les supports à hydrophober, à réaliser un assèchement à froid rapide de ces derniers, de telle manière que lesdits supports acquièrent une charge électrique positive.

4. Procédé d'enrobage selon la revendication 2, caractérisé en ce qu'il consiste, après addition séparée des deux produits chimiques spécifiques sur les supports à hydrophober, à réaliser un assèchement très rapide de ces derniers au moyen d'un mélange de ciments et de chaux, de telle manière que lesdits supports acquièrent une charge électrique positive.

5. Procédé d'enrobage selon la revendication 4, caractérisé en ce que le ciment utilisé dans le mélange de ciment et de chaux est constitué de ciment fondu.

6. Procédé d'enrobage selon l'une quelconque des revendications 1 à 5, caractérisé en ce que les liants utilisés sont des liants hydrocarbonés, sous forme de fins de distillation des pétroles bruts, coupés ou non de solvants et fluidifiés, si nécessaire, ces liants étant identiques à ceux utilisés pour l'enrobage à chaud classique ou pour l'enrobage à froid aux cut-backs.

7. Procédé d'enrobage selon la revendication 6, caractérisé en ce que les liants hydrocarbonés sont mis en oeuvre sous forme d'émulsions dont les globules de bitume portent une charge électrique négative, qui se rompent au contact des supports hydrophobés en y déposant le liant de manière homogène et adhésive, plus ou moins rapidement, en fonction du degré de stabilité desdites émulsions.

8. Procédé d'enrobage selon la revendication 7, caractérisé en ce que la stabilité des émulsions est contrôlée par l'intermédiaire des taux d'alcalis présents dans celles-ci, seuls ou en association avec des protéines ou d'autres agents stabilisateurs ou encore des agents accélérateurs de rupture, tels que, par exemple, MgSO₄, Na₂SO₃ ou les solvants pétroliers.

9. Procédé d'enrobage selon la revendication 8, caractérisé en ce que les accélérateurs de rupture peuvent être, soit introduits dans l'émulsion d'enrobage ensemble avec la farine protéique, soit mélangés, sous forme de solutions, au sel acide de sulfate de fer, ou à l'acide organique à chaîne longue, notamment un acide gras, mis en oeuvre pour hydrophober les supports à enrober.

10. Procédé d'enrobage selon l'une quelconque des revendications 8 et 9, caractérisé en ce qu'il consiste à mélanger préférentiellement les solvants pétroliers aux acides organiques à chaînes longues, solides à température ambiante, en vue de leur liquéfaction sans apport de chaleur pour un enrobage à froid.

11. Procédé d'enrobage selon la revendication 2, caractérisé en ce qu'il consiste, en vue d'empêcher les fines, éventuellement présentes, de voleter lors de la manipulation des supports à enrober sous forme de granulats filléreux, à imprégner lesdits supports de produits chimiques asséchant, mais continuant d' attirer l'humidité ambiante, tels que, notamment, CaCl₂, associés éventuellement à un mouillant anionique, n'influençant pas l'hydrophobicité desdits supports, et, le cas échéant, de solvants pétroliers, pouvant contenir, en dilution, l'acide organique à chaîne longue, nécessaire pour hydrophober lesdits supports.

12. Procédé d'enrobage selon la revendication 11, caractérisé en ce que le mouillant est préférentiellement du type C₁₂ dodécyl-2-sulfate, introduit soit dans les émulsions de liants hydrocarbonés au cours de leur fabrication, soit dans les produits chimiques spécifiques, utilisés pour hydrophober les supports ou encore injecté lors de la mise en contact des liants et des supports.

13. Procédé d'enrobage, selon l'une quelconque des revendications 1 à 12, caractérisé en ce qu'il consiste à hydrophober les supports, notamment les granulats, lors de leur concassage secondaire ou tertiaire, préférentiellement dans les ballastières ou les carrières, permettant, du fait de leur état concassé, pratiquement sec, de limiter, voire de supprimer, l'emploi de produits asséchants et de réaliser des supports hydrophobés pouvant être stockés à ciel ouvert, et ne risquant pas de se gorger d'eau.

14. Produits obtenus au moyen du procédé d'enrobage selon l'une quelconque des revendications 1 à 13, caractérisés en ce qu'ils sont principalement constitués par des supports rendus hydrophobes, sous forme de granulats vierges ou purs, recouverts d'un liant hydrocarboné, du type bitumineux.

15. Produits obtenus au moyen du procédé d'enrobage selon l'une quelconque des revendications 1 à 13, caractérisés en ce que les supports se présentent sous la forme de granulats souillés, rendus aptes à l'enrobage par leur traitement hydrophobe.

16. Produits obtenus au moyen du procédé d'enrobage selon l'une quelconque des revendications 1 à 13, caractérisés en ce que les supports se présentent sous la forme de granulats recyclés, provenant d'anciens revêtements bitumineux.

17. Produits composés de supports se présentant sous la forme de sciures de bois ou d'expansés minéraux plus légers que l'eau, rendu(e)s hydrophobes par l'action de deux produits chimiques spécifiques selon le procédé de l'une quelconque des revendications 1 à 6, 12 et 13 et non recouvert(e)s de liant, ces supports pouvant être stockés à l'air libre sans perdre leur hydrophobicité, en vue d'une application anti-pollution pour des contaminations par des hydrocarbures.

## Patentansprüche

1. Beschichtungsverfahren zum haftend Befestigen von plastischen und elastischen Bindemitteln, welche aufgrund von Wärme oder Lösungsmitteln entweder in verflüssigter oder in emulgierter Form vorliegen, auf Trägermaterialien, insbesondere vom Granulat-Typ, dadurch gekennzeichnet, daß das Verfahren vor allem die Schritte umfaßt, die zu beschichtenden Trägermaterialien vorzubehandeln, indem diese hydrophob und zu Trägern einer elektrisch positiven Ladung gemacht werden, und zwar unter der Einwirkung von zwei spezifischen chemischen Produkten, nämlich einerseits eines sauren Metallsalzes und andererseits einer langkettigen organischen Säure, derart, daß ihr Verhalten gegenüber allen Bindemitteln, ob kalt oder warm, und in all ihren Formen, vergleichmäßigt wird, daß die Trägermaterialien die Eigenschaft erhalten, diese Bindemittel anzuziehen, vorzugsweise in Wasser, und daß die genannten Bindemittel mit den hydrophoben Trägermaterialien in Kontakt gebracht werden, damit die Bindemittel sich haftend und homogen auf den Trägermaterialien ablagern.

2. Beschichtungsverfahren nach Anspruch 1, dadurch gekennzeichnet, daß die hydrophobe Eigenschaft der zu beschichtenden Trägermaterialien durch Einwirkung von zwei spezifischen chemischen Produkten erhalten wird, nämlich von Eisensulfat FeSO₄7H₂O und einer Fettsäure oder einer Naphthensäure.

3. Beschichtungsverfahren nach Anspruch 2, dadurch gekennzeichnet, daß es den Schritt umfaßt, nach dem getrennten Hinzufügen der beiden spezifischen chemischen Produkte auf die mit hydrophoben Eigenschaften zu versehenden Trägermaterialien eine schnelle Kalt-Trocknung der Trägermaterialien durchzuführen, so daß diese eine positive elektrische Ladung erhalten.

4. Beschichtungsverfahren nach Anspruch 2, dadurch gekennzeichnet, daß es den Schritt umfaßt, nach dem getrennten Hinzufügen der beiden spezifischen chemischen Produkte auf die mit den hydrophoben Eigenschaften zu versehenden Trägermaterialien eine sehr schnelle Trocknung dieser Trägermaterialien mit Hilfe eines Gemischs aus Zement und Kalk durchzuführen, so daß die Trägermaterialien eine positive elektrische Ladung erhalten.

5. Beschichtungsverfahren nach Anspruch 4, dadurch gekennzeichnet, daß der Zement, der in dem Gemisch aus Zement und Kalk verwendet wird, durch Schmelzzement gebildet ist.

6. Beschichtungsverfahren nach einem der vorhergehenden Ansprüche, dadurch gekennzeichnet, daß die verwendeten Bindemittel Kohlenwasserstoff-Bindemittel sind, welche als Restprodukte der Destillierung von Rohöl getrennt von den Losungsmitteln oder gemeinsam mit diesen und, wenn notwendig, verflüssigt vorliegen, wobei diese Bindemittel mit denen identisch sind, die für die klassische Warmbeschichtung oder für die Cut-Backs-Kaltbeschichtung verwendet werden.

7. Beschichtungsverfahren nach Anspruch 6, dadurch gekennzeichnet, daß die Kohlenwasserstoff-Bindemittel in Form von Emulsionen eingesetzt werden, deren Bitumenkügelchen eine negative elektrische Ladung tragen, wobei diese bei der Berührung mit den hydrophoben Trägermaterialien aufbrechen und dort das Bindemittel homogen und haftend und abhängig vom Grad der Stabilität der Emulsionen mehr oder weniger schnell ablagern.

8. Beschichtungsverfahren nach Anspruch 7, dadurch gekennzeichnet, daß die Stabilität der Emulsionen über den in diesen vorhandenen Gehalt an Alkalien gesteuert wird, welche allein oder in Verbindung mit den Proteinen oder anderen Stabilisatoren oder Mitteln vorliegen, welche das Aufbrechen beschleunigen, wie z.B. MgSO₄, Na₂SO₃ oder Petroleum-Lösungsmitteln.

9. Beschichtungsverfahren nach Anspruch 8, dadurch gekennzeichnet, daß die Mittel, welche das Aufbrechen beschleunigen, entweder in die Beschichtungsemulsion gemeinsam mit dem Proteinmehl eingearbeitet oder in Form von Lösungen mit einem sauren Eisensulfatsalz oder einer langkettigen organischen Säure, insbesondere einer Fettsäure, vermischt eingesetzt werden können, um die zu beschichtenden Materialien mit hydrophoben Eigenschaften zu versehen.

10. Beschichtungsverfahren nach Anspruch 8 oder 9, dadurch gekennzeichnet, daß es den Schritt umfaßt, bevorzugt die Petroleum-Lösungsmittel mit den langkettigen organischen Säuren, die bei Umgebungstemperatur fest sind, zu vermischen, um diese ohne Wärmezufuhr für eine Kalt-Beschichtung zu verflüssigen.

11. Beschichtungsverfahren nach Anspruch 2, dadurch gekennzeichnet, daß es den Schritt umfaßt, die Trägermaterialien mit chemischen Trockenmitteln zu imprägnieren, um zu verhindern, daß die eventuell vorhandenen mehlähnlichen Feinteilchen bei der Handhabung der zu beschichtenden Trägermaterialien, welche die Form von Füllstoff-Granulaten haben, aufgewirbelt werden, wobei die chemischen Trockenmittel, wie insbesondere CaCl₂, jedoch weiterhin die Umgebungsfeuchtigkeit anziehen und eventuell mit einem anionischen Befeuchtungsmittel kombiniert sind, welches die hydrophoben Eigenschaften der Trägermaterialien nicht beeinflußt, und ggf. mit Petroleum-Lösungsmitteln zu imprägnieren, die die langkettige organische Säure in Verdünnung enthalten können, die benötigt wird, um den Trägermaterialien die hydrophoben Eigenschaften zu verleihen.

12. Beschichtungsverfahren nach Anspruch 11, dadurch gekennzeichnet, daß das Befeuchtungsmittel vorzugsweise vom Typ C₁₂ Dodecyl-2-Sulfat ist, welches entweder in die Emulsionen der Kohlenwasserstoff-Bindemittel im Verlauf ihrer Herstellung oder in die spezifischen chemischen Produkte, welche dazu dienen, den Trägermaterialien ihre hydrophoben Eigenschaften zu verleihen, eingearbeitet wird oder bei dem in-Kontakt-Bringen der Bindemittel und der Trägermaterialien eingespritzt wird.

13. Beschichtungsverfahren nach einem der vorhergehenden Ansprüche, dadurch gekennzeichnet, daß es den Schritt umfaßt, die Trägermaterialien, insbesondere die Granulate, bei ihrer sekundären oder tertiären Zerkleinerung vorzugsweise in den Sandgruben oder den Steinbrüchen mit den hydrophoben Eigenschaften zu versehen, wodurch es aufgrund ihres zerkleinerten, praktisch trockenen Zustandes möglich ist, den Einsatz von Trockenmitteln einzuschränken oder ganz auf ihn zu verzichten und mit hydrophoben Eigenschaften versehene Trägermaterialien herzustellen, die ohne das Risiko, daß sie mit Wasser durchtränkt werden, unter freiem Himmel gelagert werden können.

14. Produkte, welche mit dem Beschichtungsverfahren nach nach einem der Ansprüche 1 bis 13 hergestellt sind, dadurch gekennzeichnet, daß sie hauptächlich durch mit hydrophoben Eigenschaften versehene Trägermateralien in Form von unveränderten oder reinen Granulaten gebildet sind, welche mit einem bitumenartigen Kohlenwasserstoff-Bindemittel bedeckt sind.

15. Produkte, welche mit dem Beschichtungsverfahren nach einem der Ansprüche 1 bis 13 hergestellt sind, dadurch gekennzeichnet, daß die Trägermaterialien in Form von verunreinigten Granulaten vorliegen, die durch ihre hydrophobe Behandlung für die Beschichtung geeignet gemacht worden sind.

16. Produkte, welche mit dem Beschichtungsverfahren nach einem der Ansprüche 1 bis 13 hergestellt sind, dadurch gekennzeichnet, daß die Trägermaterialien in Form von Regenerat-Granulaten vorliegen, welche aus alten bituminösen Belägen stammen.

17. Aus Trägermaterialien aufgebaute Produkte, die in Form von Holz-Sägespänen oder mineralischen Schaumstoffen vorliegen, welche leichter als Wasser sind, wobei die Holz-Sägespäne oder die mineralischen Schaumstoffe durch die Einwirkung von zwei spezifischen chemischen Produkten gemäß dem Verfahren nach einem der Ansprüche 1 bis 6, 12 und 13 mit hydrophoben Eigenschaften versehen und nicht mit einem Bindemittel bedeckt sind, und wobei diese Trägermaterialien an der freien Luft gelagert werden können, ohne ihre hydrophoben Eigenschaften zu verlieren, und zur Beseitigung von Umweltverschmutzungen im Zusammenhang mit Kontaminierungen durch Kohlenwasserstoffe einsetzbar sind.

## Claims

1. Coating process, intended for adhesively fixing plastic and elastic binders either in fluidised form owing to heat or solvents or in emulsified form to substrates, in particular of the granulates type, characterised in that it mainly involves pretreating the substrates to be coated to render them hydrophobic and carriers of a positive electric charge under the influence of two specific chemical products namely, on the one hand, a metallic acid salt and, on the other hand, a long chain organic acid, so as to render their behaviour uniform with respect to all the hot or cold binders and in all their forms, to enable them to attract these binders, preferably in water, and to place said binders in contact with these hydrophobic substrates for the adhesive and homogeneous deposition thereof on said substrates.

2. Coating process according to claim 1, characterised in that the hydrophobicity of the substrates to be coated is achieved by the action of two specific chemical products, namely iron sulphate FeSO₄7H₂O and a fatty or naphthenic acid.

3. Coating process according to claim 2, characterised in that it involves, after separate addition of the two specific chemical products to the substrates to be hydrophobised, carrying out rapid cold drying thereof so that said substrates acquire a positive electric charge.

4. Coating process according to claim 2, characterised in that it involves, after separate addition of the two specific chemical products to the substrates to be hydrophobised, carrying out very rapid drying thereof by means of a mixture of cements and lime so that said substrates acquire a positive electric charge.

5. Coating process according to claim 4, characterised in that the cement used in the mixture of cement and lime consists of fused cement.

6. Coating process according to any one of claims 1 to 5, characterised in that the binders used are hydrocarbon-containing binders in the form of distillation residues of crude oils cut or uncut with solvents and fluidised, if necessary, these binders being identical to those used for conventional hot coating or for cold coating with cutback bitumens.

7. Coating process according to claim 6, characterised in that the hydrocarbon-containing binders are used in the form of emulsions of which the bitumen globules carry a negative electric charge, which break in contact with the hydrophobised substrates while depositing the binder there in a homogeneous and adhesive manner more or less rapidly depending on the degree of stability of said emulsions.

8. Coating process according to claim 7, characterised in that the stability of the emulsions is monitored by means of the contents of alkalis present therein, alone or in combination with proteins or other stabilising agents or again breakage accelerating agents such as, for example, MgSO₄, Na₂SO₃ or petroleum solvents.

9. Coating process according to claim 8, characterised in that the breakage accelerators can be either introduced into the coating emulsion together with the protein flour or mixed in the form of solutions with the acid salt of iron sulphate or with the long chain organic acid, in particular a fatty acid, used to hydrophobise the substrates to be coated.

10. Coating process according to any one of claims 8 and 9, characterised in that it involves preferably mixing the petroleum solvents with the long chain organic acids which are solid at ambient temperature in order to liquefy them without the contribution of heat for a cold coating.

11. Coating process according to claim 2, characterised in that, in order to prevent the fines possibly present from fluttering around during handling of the substrates to be coated in the form of filler-containing granulates, it involves impregnating said substrates with chemical products which have a drying action but continue to attract the ambient moisture such as, in particular, CaCl₂ optionally combined with an anionic wetting agent which does not affect the hydrophobicity of said substrates and, if necessary, petroleum solvents which can contain, in diluted form, the long chain organic acid necessary to hyrodrophobise said substrates.

12. Coating process according to claim 11, characterised in that the wetting agent is preferably of the C₁₂ dodecyl-2-sulphate type introduced either into the emulsions of hydrocarbon-containing binders during the manufacture thereof or into the specific chemical products used to hydrophobise the substrates or again injected when the binders are brought into contact with the substrates.

13. Coating process according to any one of claims 1 to 12, characterised in that it involves hydrophobising the substrates, in particular the granulates, during the secondary or tertiary crushing thereof, preferably in the ballast pits or quarries allowing the use of drying products to be limited or even eliminated owing to their virtually dry crushed state and allowing hydrophobised substrates which can be stored in the open air and do not run the risk of becoming water-logged to be produced.

14. Products obtained by the coating process according to any one of claims 1 to 13, characterised in that they consist mainly of substrates which are rendered hydrophobic, in the form of virgin or pure granulates covered with a hydrocarbon-containing binder of the bituminous type.

15. Products obtained by the coating process according to any one of claims 1 to 13, characterised in that the substrates have the form of contaminated granulates which are made suitable for coating by their hydrophobic treatment.

16. Products obtained by the coating process according to any one of claims 1 to 13, characterised in that the substrates have the form of recycled granulates originating from former bituminous coverings.

17. Products composed of substrates having the form of wood shavings or expanded minerals which are lighter than water and are rendered hydrophobic by the action of two specific chemical products by the process according to any one of claims 1 to 6, 12 and 13 and not covered with binder, these substrates being able to be stored in the open air without losing their hydrophobicity for the anti-pollution application for contamination with hydrocarbons.
